Europäisches Patentamt

(19) European Patent Office

Office européen des brevets

(11) **EP 1 111 359 B1**

(12) **EUROPÄISCHE PATENTSCHRIFT**

(45) Veröffentlichungstag und Bekanntmachung des Hinweises auf die Patenterteilung:
**02.02.2005 Patentblatt 2005/05**

(51) Int Cl.$^7$: **G01L 5/13**

(21) Anmeldenummer: **00124871.5**

(22) Anmeldetag: **15.11.2000**

(54) **Verfahren und Vorrichtung zur Ermittlung einer Zugkraft eines spurgebundenen, angetriebenen Systems**

Method of and apparatus for determining the tractive force of a trackbound, driven system

Procédé et dispositif pour déterminer la force de traction d'un système entraîné et guidé sur une voie

(84) Benannte Vertragsstaaten:
**AT CH DE FR LI SE**

(30) Priorität: **16.11.1999 DE 19955010**

(43) Veröffentlichungstag der Anmeldung:
**27.06.2001 Patentblatt 2001/26**

(73) Patentinhaber: **DB Reise & Touristik AG**
**60326 Frankfurt (DE)**

(72) Erfinder:
• **Rick, Frank, Dr.**
**83624 Otterfing (DE)**

• **Venter, Gunter**
**80939 München (DE)**
• **Weiss, Karl**
**80997 München (DE)**

(74) Vertreter: **Zinken-Sommer, Rainer**
**Deutsche Bahn AG**
**Patentabteilung TZ 02**
**Völckerstrasse 5**
**80939 München (DE)**

(56) Entgegenhaltungen:
**DE-A- 4 228 413**

**Beschreibung**

Die Erfindung betrifft ein Verfahren zur Ermittlung einer Zugkraft eines spurgebundenen, angetriebenen Systems, das wenigstens ein Fahrzeug umfaßt sowie eine Vorrichtung zur Durchführung des Verfahrens, mit den im Oberbegriff des Anspruchs 8 genannten Merkmalen.

Verfahren und Vorrichtungen zur Ermittlung einer Zugkraft eines spurgebundenen, angetriebenen Systems sind bekannt. Unter spurgebundene, angetriebene Systeme werden beispielsweise schienengebundene Züge, die wenigstens ein Triebfahrzeug umfassen, Schnellbahnen, Magnetschwebebahnen oder dergleichen verstanden. Diese Systeme werden durch wenigstens ein Triebfahrzeug entlang einer vorgegebenen Fahrstrecke bewegt. Üblicherweise verkehren derartige spurgebundene, angetriebene Systeme in einem Taktfahrplan, das heißt, zu festgelegten Zeitpunkten müssen diese Systeme eine bestimmte Position auf der bekannten Fahrstrecke aufweisen. Hierzu bewegen sich diese Systeme mit einer Geschwindigkeit entlang der Fahrstrecke. Um diese notwendige Geschwindigkeit zu erreichen, ist das Aufbringen einer Antriebskraft notwendig, mittels der das System in Bewegung gesetzt wird. Die benötigte Antriebsenergie ist zum einen abhängig von einer Topographie der Fahrstrecke, wie beispielsweise Steigungen, Gefälle, Bogenfahrten oder dergleichen und andererseits von Parametern des Systems selber, wie beispielsweise Masse oder dergleichen.

Beim bestimmungsgemäßen Einsatz der gattungsgemäßen spurgebundenen, angetriebenen Systeme besitzen diese eine bestimmte, bekannte Antriebsleistung. Für die Einbindung der Systeme in einen Taktfahrplan ist nunmehr erforderlich zu überprüfen, ob diese Antriebsleistung ausreichend ist, entsprechend der gegebenen Systemparameter und Streckentopographie eine ausreichende Antriebskraft (nachfolgend Zugkraft) aufzubringen. Eingesetzte Triebfahrzeuge besitzen eine Zugkraftkennlinie, die die Zugkraft über der Geschwindigkeit beinhaltet. Zum Ermitteln dieser Zugkraftkennlinie beziehungsweise zum Überprüfen einer vorgegebenen Zugkraftkennlinie ist bekannt, eine momentane Zugkraft während einer Fahrt des angetriebenen Systems zu ermitteln. Zum Ermitteln der Zugkraft ist ein sogenanntes Meßradsatz-Verfahren, ein Hohlwellen-Verfahren und ein Zughaken-Meßverfahren bekannt. Bei dem Meßradsatz-Verfahren lassen sich Längs-, Quer- und Aufstandskräfte zwischen Rad und Schiene der an der Zugkraftübertragung beteiligten Radsätze erfassen. Die hierbei gemessenen Zugkräfte resultieren aus elastischen Verformungen von Radsatzwellen und -rädern, die mittels Dehnungsmeßstreifen erfaßt und mit Hilfe eines Rechners in die am Rad wirkenden Längs- und Querkräfte umgerechnet werden. Beim Hohlwellen-Verfahren werden bei Triebfahrzeugen mit einseitigen Kardanhohlwellenantrieben die Zugkräfte in beiden Radaufstandspunkten eines Radsatzes über Messungen eines Hohlwellendrehmomentes und dem bekannten Laufkreisradius der Räder ermittelt. Hierzu ist die Anordnung von Dehnungsmeßstreifen an der Hohlwelle erforderlich. Bei dem bekannten Zughaken-Meßverfahren wird das Triebfahrzeug mit einer Anhängelast (weitere Fahrzeuge, Wagen eines Zuges) über eine Zugkraftmeßkupplung verbunden. Diese Zugkraftmeßkupplung umfaßt biege- und temperaturkompensierte Dehnungsmeßstreifen, mittels denen auf die Kupplung wirkende Zugkräfte erfaßbar sind.

Bei den bekannten Zugkraft-Meßverfahren ist nachteilig, daß diese eine sehr aufwendige meßtechnische Anordnung zur direkten Zugkraftmessung erfordern. Ferner ist nachteilig, daß zur Ermittlung einer resultierenden Zugkraft aller Räder eine entsprechende Anzahl von Zugmeßeinrichtungen vorzusehen ist, deren einzelne Meßergebnisse addiert werden müssen. Bei dem Meßradsatz-Verfahren müssen hierzu insgesamt acht Radumfangskräfte und beim Hohlwellen-Verfahren vier Radumfangskräfte berücksichtigt werden. Neben hiermit gegebenen zusätzlichen Fehlerquellen ist nachteilig, daß nicht nur die statischen Anteile der auftretenden Drehmomente, sondern auch dynamische Anteile der Drehmomente erfaßt werden, die als Eigenschwingungsformen des Antriebsstranges auftreten. Hierdurch sind diese Verfahren mit einem Fehler behaftet.

Beim Einsatz einer Zugkraftmeßkupplung ist nachteilig, daß diese ausschließlich bei angetriebenen Systemen mit einem Triebfahrzeug und an das Triebfahrzeug angehängten Fahrzeugen als Last möglich ist.

Bei den bekannten Verfahren ist ferner nachteilig, daß diese in spurgebundenen, angetriebenen Systemen mit verteiltem Antrieb und spurgebundenen, angetriebenen Systemen ohne unmittelbaren Berührungskontakt zwischen System und Fahrweg, wie beispielsweise bei Magnetschwebebahnen, nicht einsetzbar sind.

Aus IMAR, Gesellschaft inertiale Meß-, Automatisierungs- und Regelsysteme, Meßsystem zur inertialen kinematischen Vermessung, Version 1.5, 1997 sind inertiale Meßsysteme bekannt, mittels denen Beschleunigungen, Drehraten und Lagewinkel eines bewegten Körpers bestimmbar sind.

Nach DE-OS 42 28 413 ist ein Verfahren zur Bestimmung der Masse eines durch Vertriebskräfte in seine Längsrichtung bewegten Kraftfahrzeuges bekannt, wobei

- wenigstens zwei Längsbeschleunigungen zu wenigstens zwei unterschiedlichen Zeitpunkten erfaßt werden, und
- die zu diesen Zeitpunkten vorliegenden Vortriebskräfte erfaßt werden, und
- aus der Differenz der Vertriebskräfte und der Differenz der Längsbeschleunigungen die Fahrzeugmasse bestimmt wird.

Dieses Verfahren ist ausschließlich auf Straßen-Kraftfahrzeuge bezogen, wobei die Masse dieses Kfz. bestimmt wird. Die Masse ist nur für die Ermittlung der Beschleunigungskraft von Bedeutung. Für alle anderen Kriterien, so auch für den Fahrwiderstand, ist die Masse eines Fahrzeuges nicht relevant.

Der Erfindung liegt die Aufgabe zugrunde, ein Verfahren und eine Vorrichtung zur Ermittlung einer Zugkraft eines spurgebundenen, angetriebenen Systems anzugeben, mittels denen ein meßtechnischer Aufwand unter Beibehaltung einer hohen Genauigkeit reduziert ist und der Einsatz bei allen spurgebundenen, angetriebenen Systemen möglich ist.

Erfindungsgemäß wird diese Aufgabe durch ein Verfahren mit den im Anspruch 1 genannten Merkmalen gelöst. Dadurch, daß der momentane Gesamtfahrwiderstand des spurgebundenen, angetriebenen Systems erfaßt wird und hieraus die Zugkraft ermittelt wird, ist vorteilhaft möglich, die Zugkraft indirekt über den Gesamtfahrwiderstand zu ermitteln, so daß auf aufwendige direkt kraftmessende Anordnungen verzichtet werden kann. Da die aufzubringende Zugkraft bei Fahrt des angetriebenen Systems mit bestimmter Geschwindigkeit exakt dem zu überwindenden Gesamtfahrwiderstand entspricht, läßt sich so in einfacher Weise durch Ermittlung des Gesamtfahrwiderstandes auf die tatsächliche momentane Zugkraft schließen. Insgesamt wird somit ein Meßverfahren bereitgestellt, das mit einem reduzierten Meßaufwand eine Zugkraft mit hoher Genauigkeit in Echtzeit ermitteln kann.

In bevorzugter Ausgestaltung der Erfindung ist vorgesehen, daß der momentane Gesamtfahrwiderstand aus einer Summe von momentanen Einzelfahrwiderständen ermittelt wird, wobei insbesondere als Einzelfahrwiderstände ein Laufwiderstand, ein Bogenwiderstand, ein Neigungswiderstand und ein Beschleunigungswiderstand ermittelt werden. Durch eine derartige Ermittlung des Gesamtfahrwiderstandes lassen sich in einfacher Weise die Fahrwiderstände des gesamten spurgebundenen, angetriebenen Systems ermitteln, das heißt, aller einzelner Fahrzeuge des Systems. Hierdurch läßt sich mit hoher Genauigkeit der Gesamtfahrwiderstand ermitteln, da sämtliche diesen Fahrwiderstand beeinflussenden Komponenten des gesamten Systems, also alle einzelne Fahrzeuge des Systems, bei der Ermittlung Berücksichtigung finden.

Durch das erfindungsgemäße Verfahren wird insgesamt möglich, in Kenntnis einer momentanen Geschwindigkeit, die durch an sich bekannte Meßverfahren ermittelbar ist, jederzeit die momentane Zugkraft zu ermitteln. Durch Ableitung der momentanen Zugkraft aus dem momentanen Gesamtfahrwiderstand ist eine direkte Kraftmessung nicht erforderlich. Hierdurch ist eine wesentliche Vereinfachung des gesamten Meßverfahrens möglich. Insbesondere auch bei verteilten Antrieben kann so die momentane Zugkraft des gesamten angetriebenen Systems ermittelt werden.

Erfindungsgemäß wird die Aufgabe ferner durch eine Vorrichtung mit den im Anspruch 8 genannten Merkmalen gelöst. Dadurch, daß wenigstens ein systemfest angeordnetes inertiales Meßsystem zur Ermittlung der momentanen Beschleunigung des Systems in den drei Raumrichtungen und der momentanen Drehraten um die drei Raumachsen und eine Meßeinrichtung zur Ermittlung der momentanen Geschwindigkeit des Systems und eine Erfassungs- und Auswerteeinheit zur Ermittlung eines momentanen Gesamtfahrwiderstandes vorgesehen sind, lassen sich in einfacher Weise die für die Ermittlung des momentanen Gesamtfahrwiderstandes benötigten Meßgrößen abgreifen, so daß über die Erfassungs- und Auswerteeinheit ohne direkte Kraftmessung die momentane Zugkraft des Systems enmittelbar ist.

Weitere bevorzugte Ausgestaltungen der Erfindung ergeben sich aus den übrigen, in den abhängigen Ansprüchen genannten Merkmalen.

Die Erfindung wird nachfolgend in einem Ausführungsbeispiel anhand der zugehörigen Zeichnungen näher erläutert. Es zeigen:

Figur 1  schematisch ein spurgebundenes, angetriebenes System;

Figur 2  ein Blockschaltbild einer Vorrichtung zur Ermittlung einer Zugkraft des Systems;

Figur 3  eine mit dem erfindungsgemäßen Verfahren ermittelte Zugkraftkennlinie;

Figur 4  Kennlinien von Einzelfahrwiderständen des Systems;

Figur 5  ein mit dem erfindungsgemäßen Verfahren ermittelter Verlauf eines Neigungswiderstandes;

Figur 6  schematisch ein konkretes Ausführungsbeispiel eines Systems und

Figur 7  schematisch ein System nach einem weiteren Ausführungsbeispiel.

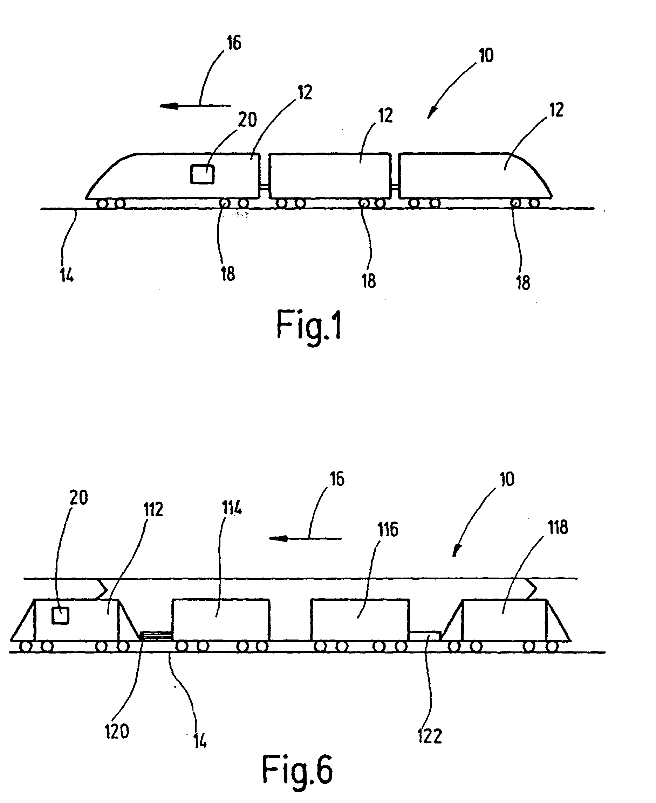

Figur 1 zeigt schematisch ein spurgebundenes, angetriebenes System 10 (nachfolgend auch Zug 10 genannt), das insgesamt drei Fahrzeuge 12 umfaßt. Selbstverständlich sind weitere Ausführungsbeispiele mit weniger oder mehr als drei Fahrzeugen 12 möglich. Innerhalb des Systems 10 ist wenigstens eines der Fahrzeuge 12 ein Triebfahrzeug, das heißt, über dieses ist eine Antriebsenergie zur Bewegung des Systems 10 entlang einer Fahrstrecke 14 in Fahrtrichtung 16 aufbringbar. Das hierzu notwendige, nicht näherdargestellte Antriebssystem umfaßt wenigstens einen Antrieb, gegebenenfalls auch mehrere Antriebe, die auf ein oder mehrere der Radsätze 18 wirken. Hierdurch erfolgt in bekannter Weise eine Übertragung der Antriebsenergie von den Radsätzen 18 auf die Fahrstrecke 14. Gegebenenfalls sind auch verteilte Antriebe vorhanden, das heißt, die Antriebsenergie wird über Radsätze 18 von mehreren Fahrzeugen 12 eines Systems 10 gleichzeitig aufgebracht. Die Fahrstrecke 14 besteht bekannterweise aus einem auf einem entsprechenden Unterbau angeordneten Gleis mit zwei Schienen. Die Fahrstrecke 14 ist entsprechend topographischer Gegebenheiten verlegt, das heißt, die Fahrstrecke 14 kann Steigungen und Gefälle sowie Bögen mit unterschiedlichen Radien aufweise.

Bei dem System 10 handelt es sich um ein spurgebundenes System, unabhängig auf welche Art die Antriebsenergie aufgebracht wird. Dies können beispielsweise schienengebundene Systeme (Hochgeschwindigkeitszüge, Güterzüge, Schnellbahnen oder dergleichen) sein oder Magnetschwebezüge, bei denen kein unmittelbarer Berührungskontakt zwischen dem System 10 und der Fahrstrecke 14 besteht.

Das System 10 umfaßt eine insgesamt mit 20 bezeichnete Vorrichtung zum Ermitteln einer momentanen Zugkraft des Systems 10. Unter momentaner Zugkraft wird die Zugkraft verstanden, die zu einem beliebigen Zeitpunkt t, bei dem das System 10 mit beliebiger Geschwindigkeit v sich in Fahrtrichtung 16 entlang der Fahrstrecke 14 bewegt, erforderlich ist.

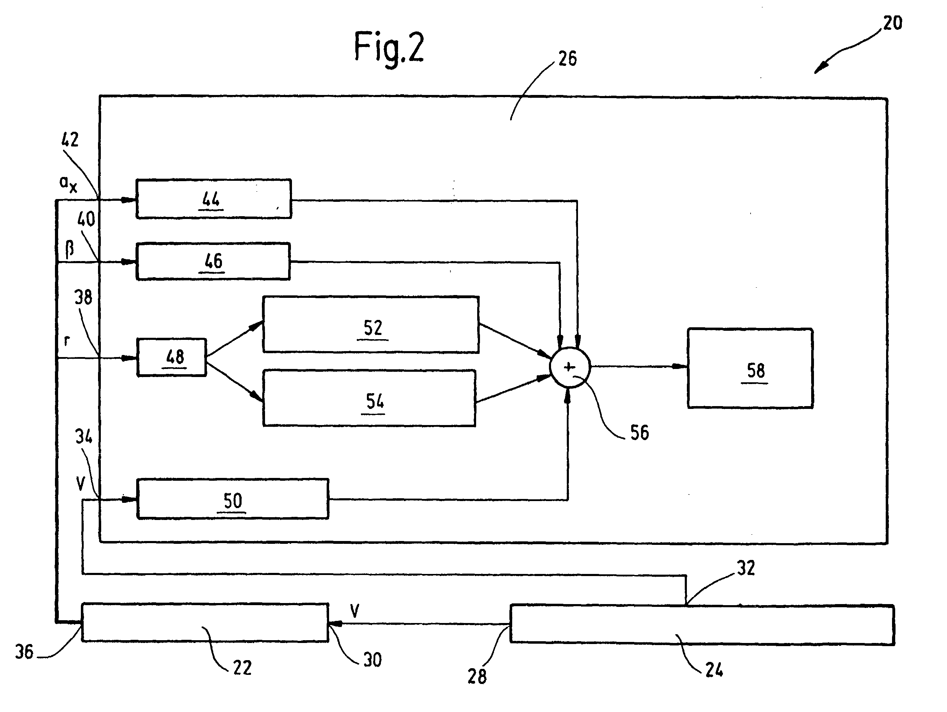

Figur 2 zeigt ein Blockschaltbild der Vorrichtung 20. Die Vorrichtung 20 umfaßt ein inertiales Meßsystem 22, eine Geschwindigkeitsmeßeinrichtung 24 sowie eine Erfassungsund Auswerteeinheit 26. Ein erster Signalausgang 28 der Geschwindigkeitsmeßeinrichtung 24 ist mit einem Eingang 30 des inertialen Meßsystems 22 verbunden. Ein zweiter Signalausgang 32 der Geschwindigkeitsmeßeinrichtung 24 ist mit einem ersten Eingang 34 der Erfassungs- und Auswerteeinheit 26 verbunden. Ein Signalausgang 36 des inertialen Meßsystems 22 ist mit Eingängen 38, 40 und 42 der Erfassungs- und Auswerteeinheit 26 verbunden.

Die Erfassungs- und Auswerteeinheit 26 umfaßt Schaltungsbestandteile 44, 46, 48, 50, 52, 54, 56 und 58, auf deren Bedeutung und Funktion nachfolgend noch näher eingegangen wird.

Die Vorrichtung 20 in Verbindung mit dem System 10 zeigt folgende Funktion:

Mittels der Vorrichtung 20 soll die momentane Zugkraft des Systems 10 ermittelt werden. Hierbei liegt die Ausgangsüberlegung zugrunde, daß um das System 10 in Fahrtrichtung 16 bewegen zu können, dieses einer Zugkraft bedarf, die alle auf das System 10 wirkenden Fahrwiderstände überwindet. Die Zugkraft wird hierbei über die angetriebenen Radsätze 18, gegebenenfalls mehrere Radsätze 18, die über die einzelnen Fahrzeuge 12 verteilt sein können, auf die Fahrstrecke 14 (Schienen) in Fahrtrichtung 16 übertragen. Entsprechend der Anzahl der angetriebenen Radsätze 18 wirken Teilzugkräfte, deren Summe die Gesamtzugkraft des Systems 10 ergeben. Bei Bewegung des Systems 10 in Fahrtrichtung 16 ist die Zugkraft $F_{zu}$ gleich dem Gesamtfahrwiderstand $F_w$, so daß gilt:

$$F_{zu} = -F_w$$

Da der Gesamtfahrwiderstand $F_w$ der Zugkraft entgegengerichtet ist, ist dieser in bezug auf die Fahrtrichtung 16 negativ.

Anhand dieser Beziehung wird deutlich, daß die Zugkraft des Systems 10 ohne direkte Kraftmessung, wie dies bisher ausschließlich im Stand der Technik genutzt wird, durch Ermittlung des Gesamtfahrwiderstands $F_w$ des Systems 10 möglich ist.

Der Gesamtfahrwiderstand $F_w$ des Systems 10 setzt sich aus einer Summe von Einzelfahrwiderständen zusammen, wobei gilt:

$$F_w = F_{wl} + F_{wb} + F_{wn} + F_{wa}.$$

mit $F_{wl}$ gleich Laufwiderstand des Systems 10, $F_{wb}$ Bogenwiderstand des Systems 10, $F_{wn}$ Neigungswiderstand des Systems 10 und $F_{wa}$ Beschleunigungswiderstand des Systems 10. Der Laufwiderstand $F_{wl}$ und der Bogenwiderstand $F_{wb}$ sind immer positiv, während der Neigungswiderstand $F_{wn}$ (bei Gefälle) und der Beschleunigungswiderstand $F_{wa}$ (bei Verzögerung) neben positiven auch negative Werte annehmen können.

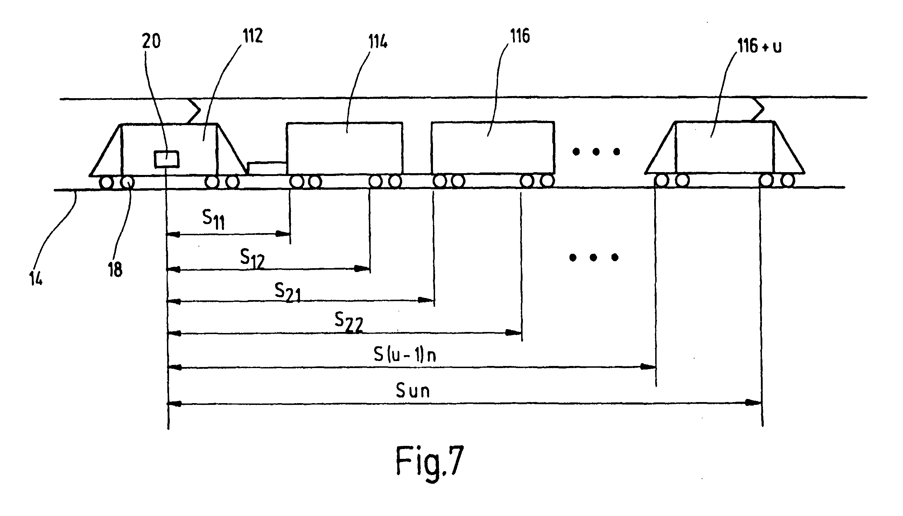

Diese Einzelfahrwiderstände des Systems 10 können entweder für das gesamte System 10 mittels einer Vorrichtung 20 ermittelt werden. Nach einem weiteren Ausführungsbeispiel kann vorgesehen sein, daß die Einzelfahrwiderstände für jedes Fahrzeug 12 des Systems 10 getrennt ermittelt werden. Hierzu wären dann eine entsprechende Anzahl von Erfassungs- und Auswerteeinheiten 26, die jeweils einem Fahrzeug 12 zugeordnet sind, erforderlich. Bei der Ermittlung der einzelnen Fahrwiderstände ist nur ein inertiales Meßsystem 22 und eine Geschwindigkeitsmeßeinrichtung 24 an einer bestimmten Stelle des Systems 10 erforderlich. An dieser Stelle werden die Eingangsgrößen der Schaltungsbestandteile 44, 46, 48, 52, 54 und 50 gemessen und zwischengespeichert. Zur Bestimmung der Einzelfahrwiderstände ist die Kenntnis der Abstände $s_i$ der einzelnen Fahrzeuge 12 (oder deren Drehgestelle) notwendig. Die Ausgangsgrößen des inertialen Meßsystems 22 werden dann unter Berücksichtigung des Abstandes $s_i$ (Figur 7) den Schaltungsbestandteilen der einzelnen Fahrzeuge zugeordnet und damit die Einzelfahrwiderstände ermittelt. Mit derselben Anordnung können die Einzeifahrwiderstände für angetriebene und nicht angetriebene Fahrzeuge getrennt ermittelt werden.

Im Sinne der Erfindung ist auch, wenn die Zugkraft eines Systems 10 dadurch ermittelt wird, wenn die Zugkraft für wenigstens ein angetriebenes Fahrzeug über die Ermittlung von dessen Gesamtfahrwiderstand erfolgt und die erforderliche Zugkraft für nicht angetriebene Fahrzeuge durch eine direkte Zugkraftmessung, beispielsweise nach dem bekannten Zughaken-Meßverfahren, ermittelt wird. Durch Summation der so ermittelbaren Einzelfahrwiderstände ergibt sich dann der Gesamtfahrwiderstand des Systems 10, über den - wie bereits erläutert - auf die Zugkraft $F_{zu}$ erkannt werden kann.

Die einzelnen Fahrwiderstände sind von einer Reihe von Randbedingungen abhängig, die bei einem bestimmten System 10 jedoch bekannt sind. So ist der Laufwiderstand $F_{wl}$ der Bogenwiderstand $F_{wb}$ und der Neigungswiderstand $F_{wn}$ näherungsweise proportional zur Gewichtskraft G, während der Beschleunigungswiderstand $F_{wa}$ linear mit der Masse m des Systems 10 verknüpft ist. Ferner ist der Laufwiderstand $F_{wl}$ von der aerodynamischen Form des Systems 10 abhängig, die sich durch das Produkt aus Luftwiderstand $C_w$ und Querschnittsfläche A in Fahrtrichtung 16 ausdrücken lassen.

Hieraus ergibt sich als allgemeingültige Beziehung für den Gesamtfahrwiderstand:

$$F_w = (w_l + w_b + w_n) \cdot G + w_a \cdot m,$$

wobei $w_l$ der spezifische Laufwiderstand, $w_b$ der spezifische Bogenwiderstand, $w_n$ der spezifische Neigungswiderstand, $w_a$ der spezifische Beschleunigungswiderstand, m die Masse und G die Gewichtskraft des Systems 10 sind.

Mittels des Schaltungsbestandteils 44 (Figur 2) der Erfassungs- und Auswerteeinheit 26 wird der Beschleunigungswiderstand ermittelt. Hierbei gilt die Beziehung.

$$F_{wa} = m \cdot a_x \, (\rho + 1),$$

wobei $a_x$ die Beschieunigung des Systems 10 in Fahrtrichtung 16, m die Masse des Systems 10 und $\rho$ ein Wichtungsfaktor für einen rotatorischen Massenanteil des Systems 10 ist. Die Masse m und der Wichtungsfaktor p sind als Konstante des Systems 10 bekannt. Die Beschleunigung $a_x$ wird, in später noch näher erläuterter Weise, am Eingang 42 von dem inertialen Meßsystem 22 bereitgestellt.

Der Beschleunigungswiderstand $F_{wa}$ ist proportional zu der Kraft, die für eine Veränderung der Geschwindigkeit aufgebracht werden muß. Bei Beharrungsfahrt des Systems 10 ist der Beschleunigungswiderstand $F_{wa}$ nicht vorhanden. Während einer Beschleunigung des Systems 10 ist eine Trägheitskraft zu überwinden, die als Beschleunigungswiderstand $F_{wa}$ betrachtet werden kann. Hierbei muß neben der Translationsbeschleunigung der Gesamtmasse m auch eine Winkelbeschleunigung der rotierenden Massen des Systems 10 berücksichtigt werden. Die Rotationsenergie der rotierenden Massen läßt sich jeweils durch die Translationsenergie einer Zusatzmasse ersetzen. Hierbei gilt:

$$\frac{\Delta m \cdot v^2}{2} = \frac{J \cdot w^2}{2}$$

wobei J das rotatorische Massenträgheitsmoment ist. Unter Berücksichtigung der Übersetzung i eines Getriebes kann man die Kraft, die zur Beschleunigung der Masse m einschließlich der Summe der einzelnen rotierenden Massen benötigt wird, nach der Beziehung

$$F_{wa} = m \cdot a + \sum J_i \cdot \left(\frac{2 \cdot i_l}{D_i}\right)^2 \cdot a = m \cdot (\rho + 1) \cdot a_x$$

berechnen. Hierdurch läßt sich also bei Kenntnis der Masse m des Wichtungsfaktors p und der Beschleunigung $a_x$ in Fahrtrichtung 16 der Beschleunigungswiderstand $F_{wa}$ des Systems 10 ermitteln. Der Faktor p beträgt beispielsweise für Reisezug- und Güterwagen 0,02 bis 0,12, für elektrische Triebwagen 0,08 bis 0,18, für elektrische Lokomotiven 0,15 bis 0,30 und als Mittelwert für einen lokbespannten Zug 0,06 bis 0,10. Die Größe des Wichtungsfaktors p für den rotatorischen Masseanteil wird entsprechend einer Gesamtmasse m des Systems gewichtet. Bei leeren oder beladenen (Fahrgäste, zu transportierende Güter) Systemen 10 ergibt ein unterschiedlicher Wichtungsfaktor p des rotatorischen Masseanteils, da die Gesamtmasse m mit der Beladung des Systems 10 sich ändert.

Mittels des Schaltungsbestandteils 46 (Figur 2) der Erfassungs- und Auswerteeinheit 26 wird der Neigungswiderstand $F_{wn}$ des Systems 10 ermittelt. Der Neigungswiderstand $F_{wn}$ ist die entgegen der Bewegungsrichtung 16 positiv gezählte Komponente der Gewichtskraft G des Zuges, die sogenannte Hangabtriebskraft. In der Ebene ist der Neigungswiderstand $F_{wn}$ = 0. Der Neigungswiderstand $F_{wn}$ ergibt sich aus

$$F_{wn}=\sin\beta \cdot m \cdot g$$

wobei $\beta$ der Neigungswinkel der Fahrtstrecke 14, m die Masse des Systems und g die Erdbeschleunigung ist. Der Neigungswinkel $\beta$ wird am Eingang 40 der Erfassungs- und Auswerteeinheit 26 - in noch zu erläuternder Weise - von dem inertialen Meßsystem 22 bereitgestellt. Die Masse m und die Erdbeschleunigung g sind als Konstante bekannt.

Mittels der Schaltungsbestandteile 48, 52 und 54 (Figur 2) der Erfassungs- und Auswerteeinheit 26 wird der Bogenwiderstand $F_{wb}$ des Systems 10 ermittelt. Der Bogenwiderstand $F_{wb}$ entsteht zusätzlich zum Laufwiderstand Fwl durch den Lauf des Systems 10 in Gleisbögen. Bei der Bogenfahrt entstehen durch die Wirkung der Fliehkräfte Querkräfte zwischen Rad und Schiene. Die Fliehkräfte steigen bei größerwerdender Geschwindigkeit v quadratisch an und werden beispielsweise zum Teil durch bautechnische Maßnahmen, beispielsweise eine Überhöhung der kurvenäußeren Schiene des Fahrweges 14, kompensiert.

Der Bogenwiderstand $F_{wb}$ ist ein zusätzlicher Reibungswiderstand, der beim Befahren von Gleisbögen entsteht. Die Ursache liegt im ungleichen Weg der starr verbundenen Räder (Innenrad und Außenrad bei Bogenfahrt) der Radsätze 18. Die durch die starre Verbindung der Räder gegebene Spurführung der Radsätze führt zu einer Schrägstellung der Radsätze bei Bogenfahrt, die zu einer Vergrößerung des Reibungswiderstandes führen. Ferner wird der Spurkranz des Außenrades bei Bogenfahrt durch die Fliehkraft gegen die Schiene gepreßt, so daß ein weiterer Reibungswiderstand gegeben ist.

Der Bogenwiderstand $F_{wb}$ ist somit von den geometrischen Verhältnissen der Fahrtstrecke 14, insbesondere vom Bogenradius r, der Spurweite der Fahrstrecke 14, der Überhöhung der äußeren Schiene sowie einer Spurerweiterung im Bogen abhängig. Ferner ist der Bogenwiderstand $F_{wb}$ von den Fahrzeugen 12 des Systems 10, beispielsweise einem Radstand, einer Radialeinstellbarkeit der Radsätze 18 abhängig. Ferner ist der Bogenwiderstand $F_{wb}$ von einem Zustand des Rad-Schiene-Kontaktes, beispielsweise infolge von Spurkranz- und/oder Schienenabnutzung, der Wirkung einer Spurkranzschmierung, von nassen oder trockenen Schienen, abhängig.

Der Bogenwiderstand $F_{wb}$ ist proportional der Spurweite $t_{sp}$. Hieraus ergibt sich

$$w_b = k_b \frac{t_{sp}}{r}$$

wobei $k_b$ der Beiwert des spezifischen Bogenwiderstandes ist.

Für die Ermittlung des Bogenwiderstandes $F_{wb}$ wird von der Beziehung ausgegangen:

$$\left[\frac{w_b}{N/kN}\right]=K\bigg/\left[\frac{r}{m}\right]$$

wobei der Koeffizient K die vorhandene Spurweite $t_{sp}$ berücksichtigt. Entsprechend bekannter Beziehung gilt für eine Spurweite $t_{sp}$ = 1435 mm,

für Bogenradien $r \geq 300$ m $F_{wb} = \dfrac{650}{r-55}$

und Bogenradien $r < 300$ m $F_{wb} = \dfrac{500}{r-30}$

Bei Bogenradien $r \geq 300$ m wird der Schaltungsbestandteil 52 und bei Bogenradien $r < 300$ m wird der Schaltungsbestandteil 54 (Figur 2) der Erfassungs- und Auswerteeinheit 26 aktiviert. Ein dem Bogenradius r entsprechendes Signal liegt am Eingang 38 an, das - wie noch später erläutert wird - von dem inertialen Meßsystem 22 zur Verfügung gestellt wird.

Der Schaltungsbestandteil 50 (Figur 2) der Erfassungs- und Auswerteeinheit 26 dient der Ermittlung 45 des Laufwiderstandes $F_{wl}$. Der Laufwiderstand $F_{wl}$ setzt sich aus dem Rollwiderstand der Räder auf dem Fahrweg 14, aus dem Reibungswiderstand der Lager und rotierender Antriebsanteile sowie aus dem Luftwiderstand des Systems 10 zusammen. Der Laufwiderstand $F_{wl}$ ist immer positiv. Der Laufwiderstand $F_{wl}$ läßt sich nach der allgemeinen Beziehung

$$w_l = c_0 + c_1 \cdot v + c_2 \cdot v^2$$

ermitteln. Der Koeffizient $c_0$ gibt den geschwindigkeitsunabhängigen Anteil an. Hiermit wird in erster Linie die rollende Reibung zwischen Rad und Schiene, die Lager- und die Federreibung, die Reibung der rotierenden Antriebsteile sowie der Einfluß von Schienenstößen oder dergleichen berücksichtigt. Dieser konstante Anteil ist somit weitgehend abhängig von der Art und dem Zustand des Systems 10 und der Qualität der Fahrstrecke 14. Durch den Koeffizienten $C_1$ des linearen Gliedes ($C_1 \cdot v$) wird der bewegungshemmende Einfluß von Luftströmungen berücksichtigt. Durch den Koeffizienten $C2$ wird der Luftwiderstand (arerodynamischer Widerstand) des Systems 10 berücksichtigt, der proportional zum Quadrat der Geschwindigkeit v ist.

Die Zahlenwerte der Koeffizienten $C_0$, $C_1$ und $C_2$ sind für bekannte Systeme 10 bekannt und werden beispielsweise während Meßfahrten gewonnen. Diese Koeffizienten $C_0$, $C_1$ und $C_2$ können in einer Tabelle abgespeichert werden und abhängig von der Gattung der verwendeten Fahrzeuge 12 des Systems 10 bei der Berücksichtigung des Fahrwiderstandes $F_v$ abgerufen werden.

Bei einem System 10 mit mehreren Fahrzeugen 12 kann zur Vereinfachung ein Mittelwert aus den Koeffizienten der einzelnen Fahrzeuge 12 gebildet werden.

Der Laufwiderstand $F_{wl}$ einzelner Fahrzeuge 12 oder eines Systems 10 läßt sich beispielsweise durch einen sogenannten Auslaufversuch ermitteln, bei dem das System 10 beziehungsweise ein Fahrzeug 12 antriebslos über eine definierte Fahrstrecke gerollt wird. Entsprechend den Reibungseinflüssen, den Luftströmungen und dem aerodynamischen Widerstand ergibt sich hierbei eine Verzögerung des rollenden Systems 10 beziehungsweise der Fahrzeuge 12, also eine negative Beschleunigung, über die der Laufwiderstand $F_{wl}$ ermittelbar ist.

Beim bestimmungsgemäßen Einsatz des Systems 10 liegt die zur Bestimmung des Laufwiderstands $F_{wl}$ benötigte Geschwindigkeit v als Signal am Eingang 34 an und wird - in noch zu erläuternder Weise - durch die Geschwindigkeitsmeßeinrichtung 24 bereitgestellt.

Über die Schaltungsbestandteile 44, 46, 48, in Verbindung mit den Schaltungsbestandteilen 52 und 54 sowie dem Schaltungsbestandteil 50 werden die Einzelfahrwiderstände $F_{wa}$, $F_{wn}$, $F_{wb}$ und $F_{wl}$ ermittelt und dem als Summierglied ausgebildeten Schaltungsbestandteil 56 zugeführt. Dieses bildet die Summe und somit den Gesamtfahrwiderstand $F_w$ des Systems 10. Entsprechend der bereits erläuterten Beziehung Zugkraft F zu ist gleich der negative Fahrwiderstand $F_w$ kann über das Schaltungsbestandteil 58 nunmehr die momentane Zugkraft $F_{zu}$ des Systems 10 ermittelt werden. Die momentane Zugkraft $F_{zu}$ läßt sich beispielsweise in ihrem zeitlichen Verlauf speichern und/oder darstellen, beispielsweise auf einem Anzeigedisplay.

Für die Ermittlung der Einzelfahrwiderstände und somit des Gesamtfahrwiderstandes $F_w$ des Systems 10 sind die Beschleuhigung $a_x$ in Fahrtrichtung 16, der Neigungswinkel β, der Bogenradius r sowie die momentane Geschwindigkeit v erforderlich. Diese Meßgrößen müssen in Echtzeit - zur Bestimmung des momentanen Gesamtfahrwiderstandes $F_w$ und somit der momentanen Zugkraft $F_{zu}$ bereitgestellt werden. Hierzu ist das inertiale Meßsystem 22 und die Geschwindigkeitsmeßeinrichtung 24 vorgesehen.

Der Laufwiderstand $F_{wl}$ ist geschwindigkeitsabhängig, so daß am Eingang 34 das momentane Geschwindigkeitssignal v bereitgestellt werden muß. Dieses wird durch die Geschwindigkeitsmeßeinrichtung 24 ermittelt, indem beispielsweise die Fahrgeschwindigkeit über Grund erfaßt wird. Die Fahrgeschwindigkeit v kann beispielsweise mit einem Inkrementalgeber an einem passiven Radsatz 18, das heißt, an einem nicht antreibbaren und nicht abbremsbaren Radsatz 18 erfaßt werden. Hierbei werden mit jeder Umdrehung des Radsatzes 18 Impulse erzeugt, so daß sich bei bekanntem Umfang und gemessener Frequenz der Impulse des Inkrementalgebers die Geschwindigkeit v in einfacher Weise bestimmen läßt. Sind keine passiven Radsätze 18 im System 10 vorhanden, beispielsweise bei Magnetschwebebahnen, läßt sich die Ist-Geschwindigkeit auch mittels an sich bekannter anderer Verfahren, beispielsweise satellitengestützter Verfahren (GPS) oder Radarmeßverfahren, bestimmen. Für die Durchführung des erfindungsgemäßen Verfahrens ist entscheidend, daß die Ist-Geschwindigkeit v als Signal bereitgestellt wird. Neben der Bestimmung des Laufwiderstandes $F_{wl}$ kann aus dem Geschwindigkeitssignal v durch Differenzierung die Beschleunigung $a_x$ des Systems 10 in Fahrtrichtung 16 ermittelt werden. Nach einer weiteren Ausführungsvariante kann vorgesehen sein, die Beschleunigung $a_x$ durch einen separaten, an sich ebenfalls bekannten Beschleunigungssensor zu erfassen. Zudem ist die Erfassung der zurückgelegten Wegstrecke über die Geschwindigkeit v möglich, die zur getrennten Erfassung der Fahrwiderstände der einzelnen Fahrzeuge notwendig ist.

Bei Steigungen oder Gefällen der Fahrstrecke 14 treten jedoch zusätzliche Erdbeschleunigungen auf, die durch einen nur in Fahrtrichtung 16 wirkenden Beschleunigungssensor beziehungsweise aus dem Geschwindigkeitssignal v nicht eliminierbar sind.

Um die relevanten Streckendaten, wie beispielsweise die Steigung β und den Bogenradius r, zu ermitteln, besitzt das inertiale Meßsystem 22 eine an sich bekannte Kreiselanordnung, mit der die Beschleunigungen in allen drei Raumrichtungen, sowie die Drehraten um alle Raumachsen gemessen werden können. Durch Kenntnis der Beschleunigung in allen drei Raumrichtungen läßt sich der Nutzbeschleunigungsanteil des Systems 10 in Fahrtrichtung 16 exakt bestimmen. Der Bogenradius r kann so aus der Geschwindigkeit v und der Drehrate um die Systemhochachse ermittelt werden. Eine Bestimmung der Neigung und der Überhöhung von Bögen ist aus den Drehraten um die Systemlängsachse und die Systemquerachse möglich.

Funktion und Aufbau derartiger auf einem Kreiselprinzip basierender inertialer Meßsysteme 22 sind bekannt, so daß im Rahmen der vorliegenden Beschreibung hierauf nicht näher eingegangen werden soll. Entscheidend ist, daß mit derartigen inertialen Meßsystemen 22 Beschleunigungen, Drehraten und die Lagewinkel eines bewegten Körpers, hier des bewegten Systems 10, bestimmt werden können.

Das inertiale Meßsystem 22 ist an einer definierten Stelle des Systems 10 angeordnet. Hierdurch wird sichergestellt, daß dieses System fest angeordnet ist, so daß das inertiale Meßsystem 22 den gleichen dynamischen Einflüssen unterworfen wird wie das System 10.

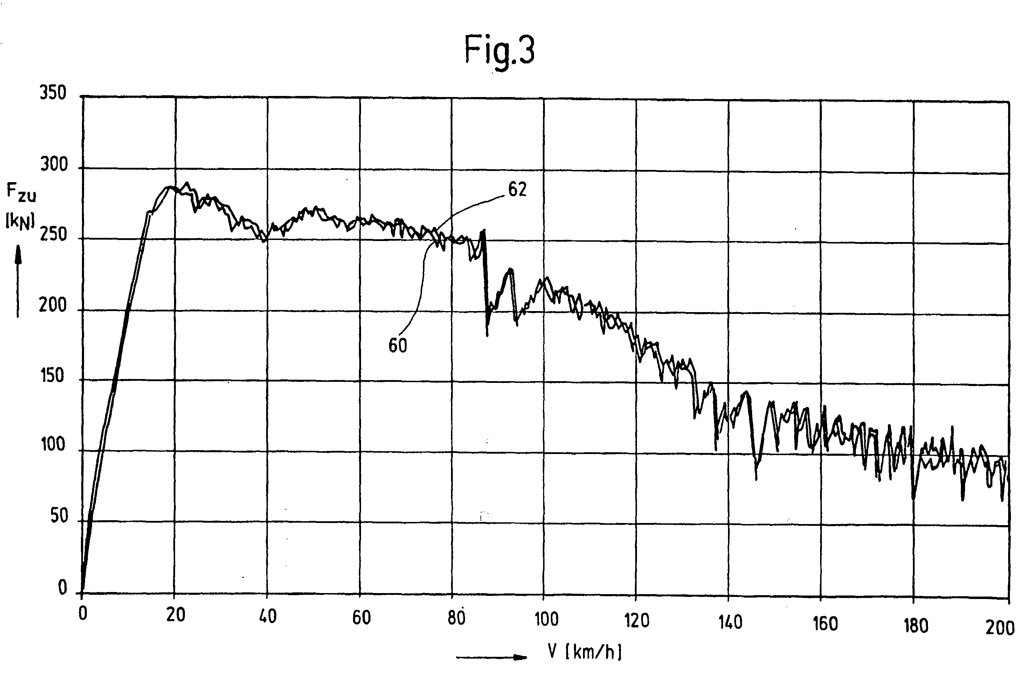

Nachfolgend soll anhand der Figuren 3, 4 und 5 das Verfahren zur Ermittlung der Zugkraft $F_{zu}$ anhand eines konkreten Beispieles, das schematisch in Figur 6 dargestellt ist, verdeutlicht werden.

Figur 6 zeigt schematisch einen Zug 10, der von einem als Elektrolokomotive ausgebildeten Triebfahrzeug 112 entlang der Fahrstrecke 14 bewegbar ist. Mittels der Vorrichtung 20 soll die Zugkraft $F_{zu}$ des Triebfahrzeuges 112 erfaßt werden, die diese auf den Zug 10 ausübt. Der Zug 10 umfaßt neben dem Triebfahrzeug 112 einen Meßwagen 114, einen Begleitwagen 116 sowie ein Bremstriebfahrzeug 118. Das Triebfahrzeug 112 ist mit dem Meßwagen 114 über eine bekannte Zugkraftmeßkupplung 120 gekuppelt. Diese Zugkraftmeßkupplung 120 dient lediglich der Verifizierung der von der Vorrichtung 20 gelieferten Momentanwerte der Zugkraft $F_{zu}$. Während einer tatsächlichen Meßfahrt kann auf die Anordnung der Zugkraftmeßkupplung 120 verzichtet werden. Das Bremstriebfahrzeug 118 ist mit dem Begleitwagen 116 über einen Bremszugkrafthaken 122 verbunden. Das Bremstriebfahrzeug 118 dient der Simulation der Last eines Zuges aus einer Vielzahl von Fahrzeugen 12 (Figur 1). Wird das Bremstriebfahrzeug 118 durch das Triebfahrzeug 112 mitgezogen, wirkt ein Bremsmoment. Die hieraus resultierende zusätzliche Bremskraft wird über den Bremszugkrafthaken 122 erfaßt und bei der Ermittlung des Beschleunigungswiderstandes $F_{wa}$ durch Addition berücksichtigt.

Durch die Vorrichtung 20 werden - wie erläutert - der Beschleunigungswiderstand $F_{wa}$, der Neigungswiderstand $F_{wn}$, der Bogenwiderstand $F_{wb}$ und der Laufwiderstand $F_{wl}$ ermittelt. Die Summe, also der Gesamtfahrwiderstand $F_w$ der so ermittelten Einzelfahrwiderstände, stellt die Zugkraft $F_{zu}$ am Radumfang aller Antriebsräder des Triebfahrzeuges 112 dar.

In Figur 3 sind zwei Zugkraftkennlinien dargestellt, wobei die Zugkraft $F_{zu}$ über der Geschwindigkeit v eingetragen ist. Eine erste Zugkraftkennlinie 60 zeigt den mittels der Vorrichtung 20 ermittelten Verlauf der Zugkraft $F_{zu}$. Eine zweite Kennlinie 62 zeigt den Verlauf der Zugkraft $F_{zu}$, der lediglich zu Verifizierungszwecken mittels der Zugkraftmeßkupplung 120 ermittelt wurde. Anhand des im wesentlichen deckungsgleichen Verlaufes der Kennlinien 60 und 62 wird deutlich, daß durch die Vorrichtung 20 und des mittels der Vorrichtung 20 durchgeführten Verfahrens zur Ermittlung der Zugkraft $F_{zu}$ sehr exakte Werte bereitgestellt werden können. Diese werden bereitgestellt, ohne daß, wie bei der Zugkraftmeßkupplung 120, eine direkte Zugkraftmessung erfolgt.

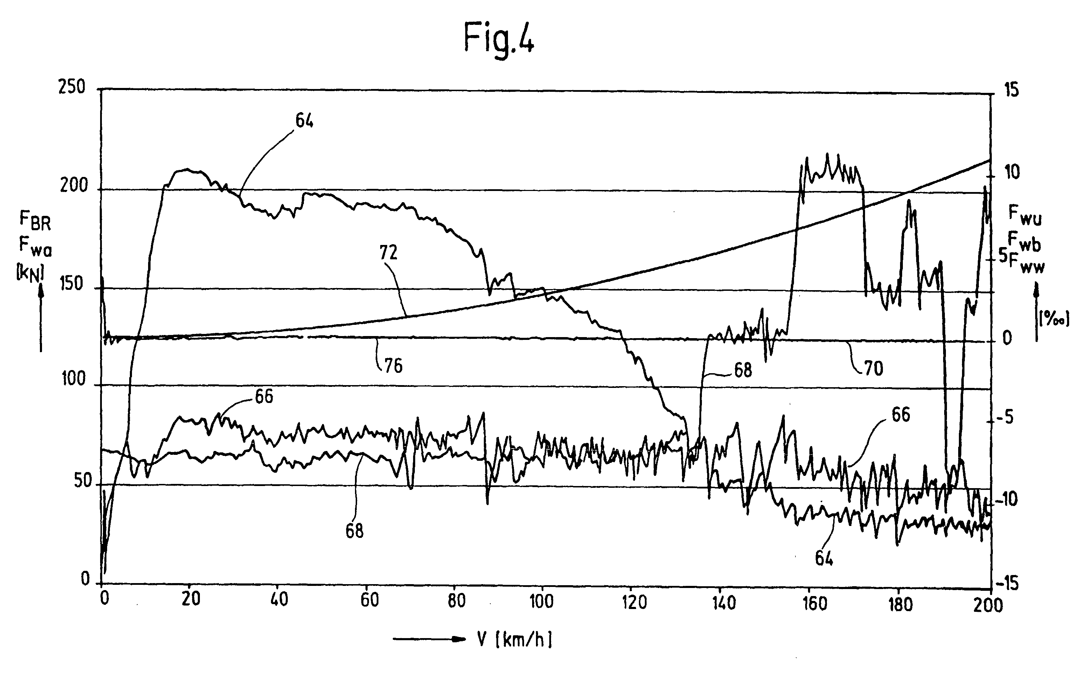

Figur 4 zeigt zur Verdeutlichung den Verlauf der Einzelfahrwiderstände über der Geschwindigkeit v. Hierbei sind links die Bremskraft $F_{br}$ und der Beschteunigungswiderstand $F_{wa}$ sowie rechts der Neigungswiderstand $F_{wn}$, der Bogenwiderstand $F_{wb}$ sowie der Laufwiderstand $F_{wl}$ skaliert.

Eine Kennlinie 64 verdeutlicht den Verlauf der Bremskraft $F_{br}$, die die über das Bremstriebfahrzeug 118 simulierte Last berücksichtigt. Eine Kennlinie 66 zeigt den Verlauf des Beschleunigungswiderstandes $F_{wa}$, der den zur Massenbeschleunigung des Zuges 10 benötigten Kraftanteil berücksichtigt. Eine Kennlinie 68 stellt den Verlauf des Neigungswiderstandes $F_{wn}$ unter Berücksichtigung von Steigungen und Gefällen der Fahrstrecke 14 dar. Eine Kennlinie 70 stellt den Verlauf des Bogenwiderstandes $F_{wb}$ dar. Bei der hier dokumentieren Meßfahrt handelt es sich um eine Fahrstrecke 14 ohne Bögen, so daß die Kennlinie 70 im wesentlichen auf der Null-Linie verläuft. Schließlich ist noch Kennlinie 72 eingetragen, die den Verlauf des Laufwiderstandes $F_{wl}$ kennzeichnet. Es wird deutlich, daß mit steigender Geschwindigkeit v der Laufwiderstand $F_{wl}$ exponentiell zunimmt.

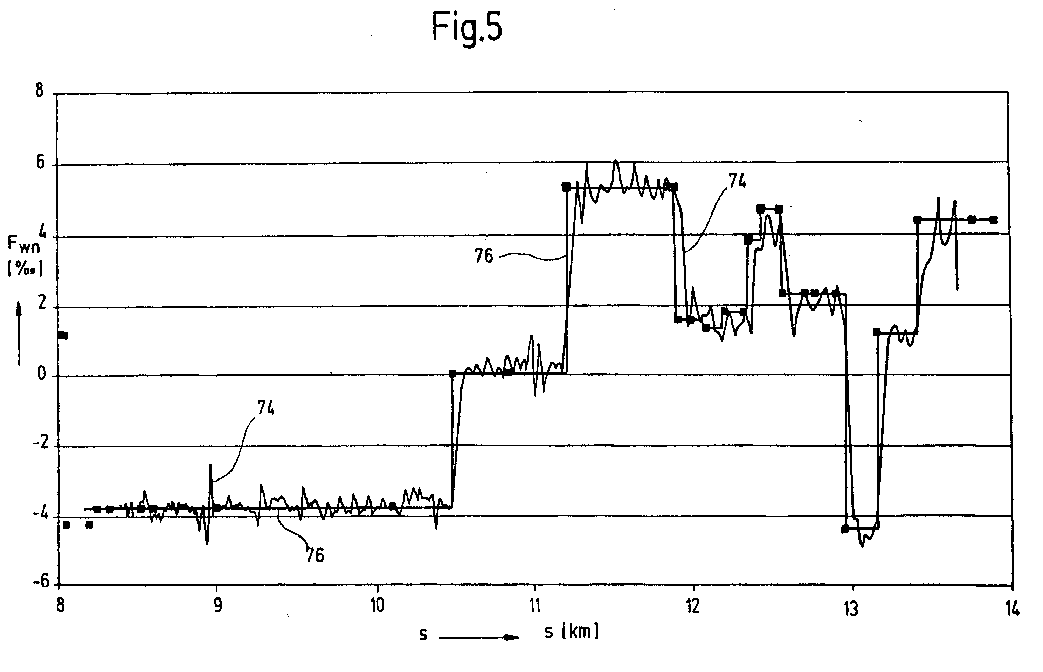

In Figur 5 ist der Neigungswiderstand $F_{wn}$ über die Entfernung s der Fahrstrecke 14 dargestellt. Eine erste Kennlinie 74 stellt den Verlauf der mittels der Vorrichtung 20 gemessenen Neigungswiderstände $F_{wn}$ dar, während eine zweite Kennlinie 76 zum Vergleich die aus einer bekannten Streckendatei entnommene Neigung der Fahrstrecke 14 darstellt. Es wird deutlich, daß der gemessene Neigungswiderstand $F_{wn}$ im wesentlichen deckungsgleich mit dem tatsächlichen Neigungsverlauf der Fahrstrecke 14 übereinstimmt. Hier ergibt sich als weiterer Vorteil, daß eine Streckendatei von Fahrstrecken 14, die nur sehr aufwendig erstellbar sind, für die Bestimmung des Neigungswiderstandes $F_{wn}$ an sich nicht benötigt wird. Ferner ist mittels der momentanen Messung des Neigungswiderstandes $F_{wn}$ eine genauere Messung möglich, da hier die tatsächlichen momentanen Streckenverhältnisse Berücksichtigung finden, die von errechneten erwartenden Streckenverhältnissen, die in einer Streckendatei abgelegt sind, abweichen können.

**Patentansprüche**

1. Verfahren zur Ermittlung einer Zugkraft eines spurgebundenen, angetriebenen Systems, das wenigstens ein Fahrzeug umfaßt, **dadurch gekennzeichnet, daß** der momentane Gesamtfahrwiderstand ($F_w$) des Systems (10) aus einer Summe von momentanen Einzelfahrwiderständen ermittelt wird, wobei als Einzelfahrwiderstand ein Laufwiderstand ($F_{wl}$), ein Bogenwiderstand ($F_{wb}$), ein Neigungswiderstand ($F_{wn}$) und ein Beschleunigungswiderstand ($F_{wa}$) berücksichtigt werden und hieraus die Zugkraft ($F_{zu}$) nach der Formel

$$- F_{zu} = F_{wl} + F_{wb} + F_{wn} + F_{wa}$$

   ermittelt wird, die dem negativen Gesamtfahrwiderstand ($F_w$) entspricht und die einzelnen Faktoren sich nach folgender Beziehung zusammensetzen

$$F_{zu} = [(c_0 + c_1 \cdot v + c_2 \cdot v^2)m \cdot g] + [(K/r) \cdot m \cdot g] + [\sin \beta \cdot m \cdot g] + [m \cdot a_x \cdot (\rho + 1)],$$

   und

   $c_0$ - Koeffizient für den geschwindigkeits-unabhängigen Anteil
   $c_1$ - Koeffizient des linearen Gliedes
   $c_2$ - Koeffizient für den Luftwiderstand des Systems
   v - momentane Geschwindigkeit des Systems
   m - Masse des Systems
   g - Erdbeschleunigung
   K - Koeffizient für die Spurweite
   r - Bogenradius
   β - Neigungswinkel der Fahrstrecke
   $a_x$ - Beschleunigung des Systems in Fahrtrichtung
   ρ - Wichtungsfaktor für den rotatorischen Masseanteil

   bedeuten.

2. Verfahren nach Anspruch 1, **dadurch gekennzeichnet, daß** die Einzelfahrwiderstände ($F_{wl}$, $F_{wb}$, $F_{wn}$, $F_{wa}$) für das gesamte System (10) als Ganzes mittelt werden.

3. Verfahren nach Anspruch 1, **dadurch gekennzeichnet, daß** die Einzelfahrwiderstände ($F_{wl}$, $F_{wb}$, $F_{wn}$, $F_{wa}$) für jedes Fahrzeug (12) des Systems (10) einzeln ermittelt werden und hieraus die Gesamteinzelfahrwiderstände des Systems (10) ermittelt werden.

4. Verfahren nach einem der vorhergehenden Ansprüche **dadurch gekennzeichnet, daß** die Einzelfahrwiderstände ($F_{wl}$, $F_{wb}$, $F_{wn}$, $F_{wa}$) für angetriebene Fahrzeuge (12) und nicht angetriebene Fahrzeuge (12) des Systems getrennt ermittelt werden und hieraus die Gesamteinzelfahrwiderstände des Systems (10) ermittelt werden.

5. Verfahren nach einem der Ansprüche 1 bis 4, **dadurch gekennzeichnet, daß** die Fahrwiderstände der nicht angetriebenen Fahrzeuge über eine bekannte Meßmethode, die den Stand der Technik bildet zum Beispiel Meßzughaken, erfaßt wird und die Zugkraft des Triebfahrzeuges über dessen Gesamtfahrwiderstand ermittelt wird.

6. Vorrichtung zur Ermittlung einer Zugkraft eines spurgebundenen, angetriebenen Systems, das wenigstens ein Fahrzeug umfaßt, **gekennzeichnet durch** wenigstens ein systemfest angeordnetes, inertiales Meßsystem (22) zur Ermittlung der momentanen Beschleunigung des Systems (10) in den drei Raumrichtungen und den momentanen Drehraten des Systems (10) um die drei Raumachsen, eine Meßeinrichtung (24) zur Ermittlung der momentanen Geschwindigkeit (v) des Systems (10) und eine Erfassungs- und Auswerteeinheit (26) zur Ermittlung eines momentanen Gesamtfahrwiderstandes ($F_w$) des Systems (10) aus einer Summe von momentanen Einzelfahrwiderständen, wobei als Einzelfahrwiderstand ein Laufwiderstand ($F_{wl}$), ein Bogenwiderstand ($F_{wb}$), ein Neigungswiderstand ($F_{wn}$) und ein Beschleunigungswiderstand ($F_{wa}$) zu berücksichtigen sind und die Zugkraft $F_{zu}$ nach der Formel

$$- F_{zu} = F_{wl} + F_{wb} + F_{wn} + F_{wa}$$

zu ermitteln ist, wobei sich die einzelnen Faktoren sich nach folgender Beziehung zusammensetzen

$$F_{zu}=[(c_0+c_1 \cdot v+c_2 \cdot v^2)m \cdot g]+[(k/r) \cdot m \cdot g]+[\sin\beta \cdot m \cdot g]+[m \cdot a_x \cdot (\rho+1)].$$

und

$c_0$ - Koeffizient für den geschwindigkeits-unabhängigen Anteil
$c_1$ - Koeffizient des linearen Gliedes
$c_2$ - Koeffizient für den Luftwiderstand des Systems
v- momentane Geschwindigkeit des Systems
m - Masse des Systems
g - Erdbeschleunigung
K - Koeffizient für die Spurweite
r - Bogenradius
$\beta$ - Neigungswinkel der Fahrstrecke
$a_x$- Beschleunigung des Systems in Fahrtrichtung
$\rho$ - Wichtungsfaktor für den rotatorischen Masseanteil

bedeuten.

7. Vorrichtung nach Anspruch 6, **dadurch gekennzeichnet, daß** die Erfassungsund Auswerteeinheit (26) ein Schaltungsbestandteil (44) zur Erfassung eines momentanen Beschleunigungswiderstandes ($F_{wa}$) umfaßt.

8. Vorrichtung nach einem der vorhergehenden Ansprüche, **dadurch gekennzeichnet, daß** die Erfassungs- und Auswerteeinheit (26) ein Schaltungsbestandteil (46) zur Erfassung eines momentanen Neigungswiderstandes ($F_{wn}$) umfaßt.

9. Vorrichtung nach einem der vorhergehenden Ansprüche, **dadurch gekennzeichnet, daß** die Erfassungs- und Auswerteeinheit (26) Schaltungsbestandteile (48, 52, 54) zur Erfassung eines momentanen Bogenwiderstandes ($F_{wb}$) umfaßt.

10. Vorrichtung nach einem der vorhergehenden Ansprüche, **dadurch gekennzeichnet, daß** die Erfassungs- und Auswerteeinheit (26) ein Schaltungsbestandteil (50) zur Erfassung eines momentanen Laufwiderstandes ($F_{wl}$) umfaßt.

11. Vorrichtung nach einem der vorhergehenden Ansprüche, **dadurch gekennzeichnet, daß** die Erfassungs- und Auswerteeinheit (26) ein Schaltungsbestandteil (56) umfaßt, mittels dem die momentanen Beschleunigungswiderstände ($F_{wa}$), Neigungswiderstände ($F_{wn}$), Bogenwiderstände ($F_{wb}$) und Laufwiderstände ($F_{wl}$) zu dem momentanen Gesamtfahrwiderstand ($F_w$) summierbar sind.

12. Vorrichtung nach einem der vorhergehenden Ansprüche, **dadurch gekennzeichnet, daß** mittels des inertialen Meßsystems (22) ein Neigungswinkel ($\beta$), ein Bogenradius (r) einer Fahrstrecke (14) des Systems (10) und eine **Be**schleunigung ($a_x$) des Systems (10) in Fahrtrichtung (16) ermittelbar ist.

13. Vorrichtung nach einem der vorhergehenden Ansprüche, **dadurch gekennzeichnet, daß** die Erfassungs- und Auswerteeinheit (26) ein Schaltungsbestandteil (58) zur Bestimmung der Zugkraft ($F_{zu}$) aus dem Gesamtfahrwiderstand ($F_w$) umfaßt.

14. Vorrichtung nach einem der vorhergehenden Ansprüche, **dadurch gekennzeichnet, daß** das System (10) ein schienengebundener Zug mit wenigstens einem Triebfahrzeug ist.

**15.** Vorrichtung nach einem der Ansprüche 6 bis 14, **dadurch gekennzeichnet, daß** das System (10) eine Magnetschwebebahn ist.

**16.** Vorrichtung nach einem der vorhergehenden Ansprüche, **dadurch gekennzeichnet, daß** das System (10) einen verteilten Antrieb besitzt.

**Claims**

**1.** A method for determining a tractive power of a railborne driven system that comprises at least one vehicle, **characterized in that** the total instantaneous tractive resistance ($F_w$) of the system (10) is determined from the sum of individual instantaneous tractive resistances, wherein the individual tractive resistances being considered are a running resistance ($F_{wl}$) , a curve resistance ($F_{wb}$), a gradient resistance ($F_{wn}$) and an acceleration resistance ($F_{wa}$) and the tractive power ($F_{zu}$) is determined thereof in accordance with the formula

$$- F_{zu} = F_{wl} + F_{wb} + F_{wn} + F_{wa}$$

wherein this tractive power corresponds to the total negative tractive resistance ($F_w$) and the individual factors are related as follows

$$F_{zu} = [ (c_0 + c_1 \cdot v + c_2 \cdot v^2) \, m \cdot g] + [ (K/r \cdot m \cdot g] + [\sin\beta \cdot m \cdot g] + [m \cdot a_x \cdot (\rho + 1) ]$$

and wherein

$c_0$-coefficient for the speed-independent fraction
$c_1$-coefficient of the linear element
$c_2$-coefficient for the aerodynamic drag of the system
v-instantaneous speed of the system
m-mass of the system
g-gravitational acceleration
K-coefficient for the rail gauge
r-curve radius
$\beta$-gradient of the track
$a_x$-acceleration of the system in the driving direction
$\rho$-weighting factor for the rotatory mass fraction.

**2.** The method according to Claim 1, **characterized in that** the individual tractive resistances ($F_{wl}$, $F_{wb}$, $F_{wn}$, $F_{wa}$) are determined as a whole for the entire system (10).

**3.** The method according to Claim 1, **characterized in that** the individual tractive resistances ($F_{wl}$, $F_{wb}$, $F_{wn}$, $F_{wa}$) are determined individually for each vehicle (12) of the system (10) and the total individual tractive resistances of the system (10) are determined thereof.

**4.** The method according to one of the preceding claims, **characterized in that** the individual tractive resistances ($F_{wl}$, $F_{wb}$, $F_{wn}$, $F_{wa}$) are determined separately for driven vehicles (12) and non-driven vehicles (12) of the system and the total individual tractive resistances of the system (10) are determined thereof.

**5.** The method according to one of Claims 1-4, **characterized in that** the tractive resistances of the non-driven vehicles are determined with a conventional measuring method according to the state of the art, for example, a measuring draw-hook, and the tractive power of the traction vehicle is determined based on its total tractive resistance.

**6.** A device for determining a tractive power of a railborne driven system that comprises at least one vehicle, **characterized in that** the device comprises at least one inertial measuring system (22) that is rigidly arranged on the system and serves for determining the instantaneous acceleration of the system (10) in the three directions in space, as well as the instantaneous rotational speeds of the system (10) about the three axes in space, a measuring device (24) for determining the instantaneous speed (v) of the system (10) and an acquisition and evaluation unit (26) for determining the total instantaneous tractive resistance (Fw) of the system (10) from a sum of individual instantaneous tractive resistances, wherein the individual tractive resistances being considered are a running resistance ($F_{wl}$), a curve resistance ($F_{wb}$), a gradient resistance ($F_{wn}$) and an acceleration resistance ($F_{wa}$) and the tractive power $F_{zu}$ is determined thereof in accordance with the formula

$$- F_{zu} = F_{wl} + F_{wb} + F_{wn} + F_{wa}$$

wherein the individual factors are related as follows

$$F_{zu} = [ (c_0 + c_1 \cdot v + c_2 \cdot v^2) \, m \cdot g] + [ (K/r \cdot m \cdot g] + [\sin\beta \cdot m \cdot g] + [m \cdot a_x \cdot (\rho+1) ]$$

and wherein

$c_0$-coefficient for the speed-independent fraction
$c_1$-coefficient of the linear element
$c_2$-coefficient for the aerodynamic drag of the system
v-instantaneous speed of the system
m-mass of the system
g-gravitational acceleration
K-coefficient for the rail gauge
r-curve radius
$\beta$-gradient of the track
$a_x$-acceleration of the system in the driving direction
$\rho$-weighting factor for the rotary mass fraction.

**7.** The device according to Claim 6, **characterized in that** the acquisition and evaluation unit (26) comprises a circuit component (44) for determining an instantaneous acceleration resistance ($F_{wa}$) .

**8.** The device according to one of the preceding claims, **characterized in that** the acquisition and evaluation unit (26) comprises a circuit component (46) for determining an instantaneous gradient resistance ($F_{wn}$) .

**9.** The device according to one of the preceding claims, **characterized in that** the acquisition and evaluation unit (26) comprises circuit components (48, 52, 54) for determining an instantaneous curve resistance ($F_{wb}$).

**10.** The device according to one of the preceding claims, **characterized in that** the acquisition and evaluation unit (26) comprises a circuit component (50) for determining an instantaneous running resistance ($F_{wl}$).

**11.** The device according to one of the preceding claims, **characterized in that** the acquisition and evaluation unit (26) comprises a circuit component (56) for adding the instantaneous acceleration resistances ($F_{wa}$) , gradient resistances ($F_{wn}$), curve resistances ($F_{wb}$) and running resistances ($F_{wl}$) in order to obtain the total instantaneous tractive resistance ($F_w$).

**12.** The device according to one of the preceding claims, **characterized in that** a gradient ($\beta$), a curve radius (r) of a track (14) of the system (10) and an acceleration ($a_x$) of the system (10) in the driving direction (16) can be determined by means of the inertial measuring system (22).

**13.** The device according to one of the preceding claims, **characterized in that** the acquisition and evaluation unit (26) comprises a circuit component (58) for determining the tractive power ($F_{zu}$) from the total tractive resistance ($F_w$).

**14.** The device according to one of the preceding claims, **characterized in that** the system (10) consists of a railborne train with at least one traction vehicle.

**15.** The device according to one of Claims 6-14, **characterized in that** the system (10) consists of a magnetic levitation train.

**16.** The device according to one of the preceding claims, **characterized in that** the system (10) has a distributed drive.

**Revendications**

**1.** Dispositif de détermination d'une force de traction d'un système entraîné sur voie qui comporte au moins un véhicule, **caractérisé en ce que** l'effort résistant global ($F_w$) du système (10) est déterminé à partir d'une somme de différents efforts résistants momentanés, étant pris en compte comme différents efforts résistants une résistance propre ($F_{wl}$), une résistance due aux courbes ($F_{wb}$), une résistance due à l'inclinaison ($F_{wn}$) et une résistance due à l'accélération ($F_{wa}$) et la force de traction étant déterminée à partir de là suivant la formule

$$- F_{zu} = F_{wl} + F_{wb} + F_{wn} + F_{wa},$$

qui correspond à l'effort résistant global négatif ($F_w$) et les différents facteurs se composant suivant l'équation suivante :

$$F_{zu} = [(c_0 + c_1 \cdot v + C2.v^2)\, m.g] + [\,(K/r)\,.m.g]$$
$$+ \sin\beta.m.g] + [m.a_x.(\rho+1)]$$

où on a :

    $c_0$ - coefficient pour la composante indépendante de la vitesse
    $c_1$ coefficient de l'élément linéaire
    $c_2$ - coefficient pour la résistance due à l'air du système
    v - vitesse momentanée du système
    m - masse du système
    g - accélération terrestre
    K - coefficient de largeur de voie
    r - rayon de courbe
    $\beta$ - angle d'inclinaison de la ligne
    $a_x$ - accélération du système dans le sens de déplacement
    $\rho$ - facteur de pondération pour la composante de masse rotatoire

**2.** Procédé selon la revendication 1, **caractérisé en ce que** les différents efforts résistants ($F_{wl}$, $F_{wb}$, $F_{wn}$, $F_{wa}$) sont déterminés en tant qu'ensemble pour le système global (10).

**3.** Procédé selon la revendication 1, **caractérisé en ce que** les différents efforts résistants ($F_{wl}$, $F_{wb}$, $F_{wn}$, $F_{wa}$) sont déterminés pour chaque véhicule (12) du système (10) et qu'on détermine à partir de là la somme des différents efforts résistants du système (10).

**4.** Procédé selon l'une quelconque des revendications précédentes, **caractérisé en ce que** les différents efforts résistants ($F_{wl}$, $F_{wb}$, $F_{wn}$, $F_{wa}$) sont déterminés séparément pour les véhicules entraînés (12) et les véhicules non entraînés (12) du système et qu'on détermine à partir de là la somme des différents efforts résistants du système (10).

**5.** Procédé selon l'une quelconque des revendications 1 à 4, **caractérisé en ce que** les efforts résistants des véhicules non entraînés sont enregistrés par une méthode de mesure connue qui constitue l'état de la technique, par exemple des crochets d'attelage de mesure, et que la force de traction du véhicule moteur est déterminée par le biais de son effort résistant global.

**6.** Dispositif de détermination d'une force de traction d'un système entraîné sur voie qui comporte au moins un véhicule, **caractérisé par** au moins un système de mesure inertiel (22) disposé fixement dans le système pour la détermination de l'accélération momentanée du système (10) dans les trois directions spatiales et les trois vitesses de rotation momentanées du système (10) autour des trois axes spatiaux, un dispositif de mesure (24) pour la détermination de la vitesse momentanée (v) du système (10) et une unité d'enregistrement et d'exploitation (26) pour la détermination d'un effort résistant global momentané ($F_w$) du système (10) à partir d'une somme de différents efforts résistants momentanés, sachant qu'il faut tenir compte comme différents efforts résistants d'une résistance propre ($F_w$), d'une résistance due aux courbes ($F_{wb}$), d'une résistance due à l'inclinaison ($F_{wn}$) et d'une résistance due à l'accélération ($F_{wa}$) et que la force de traction $F_{zu}$ doit être déterminée suivant la formule

$$- F_{zu} = F_{wl} + F_{wb} + F_{wn} + F_{wa}$$

et que les différents facteurs sont composés suivant l'équation suivante :

$$F_{zu} = [\,(c_0 + c_1 \cdot v + C_2 \cdot v^2)\, m.g] + [(K/r).m.g]$$
$$+ \sin\beta.m.g] + [m.a_x.\,(\rho+1)\,]$$

où on a :

$c_0$ - coefficient pour la composante indépendante de la vitesse
$C_1$ - coefficient de l'élément linéaire
$c_2$ - coefficient pour la résistance due à l'air du système
$v$ - vitesse momentanée du système
$m$ - masse du système
$g$ - accélération terrestre
$K$ - coefficient de largeur de voie
$r$ - rayon de courbe
$\beta$ - angle d'inclinaison de la ligne
$a_x$ - accélération du système dans le sens de déplacement
$\rho$ - facteur de pondération pour la partie de masse rotatoire

**7.** Dispositif selon la revendication 6, **caractérisé en ce que** l'unité d'enregistrement et d'exploitation (26) comprend une composante de circuit (44) pour l'enregistrement d'une résistance momentanée due à l'accélération ($F_{wa}$).

**8.** Dispositif selon l'une quelconque des revendications précédentes, **caractérisé en ce que** l'unité d'enregistrement et d'exploitation (26) comprend une composante de circuit (46) pour l'enregistrement d'une résistance momentanée due à l'inclinaison ($F_{wn}$).

**9.** Dispositif selon l'une quelconque des revendications précédentes, **caractérisé en ce que** l'unité d'enregistrement et d'exploitation (26) comprend des composantes de circuit (48, 52, 54) pour l'enregistrement d'une résistance momentanée due aux courbes ($F_{wb}$).

**10.** Dispositif selon l'une quelconque des revendications précédentes, **caractérisé en ce que** l'unité d'enregistrement et d'exploitation (26) comprend une composante de circuit (50) pour l'enregistrement d'une résistance propre momentanée ($F_{wl}$).

**11.** Dispositif selon l'une quelconque des revendications précédentes, **caractérisé en ce que** l'unité d'enregistrement et d'exploitation (26) comprend une composante de circuit (56) qui permet de totaliser les résistances dues à l'accélération ($F_{wa}$), les résistances dues à l'inclinaison ($F_{wn}$) , les résistances dues aux courbes ($F_{wb}$) et les résistances propres ($F_{wl}$) momentanées pour obtenir l'effort résistant global ($F_w$) momentané.

**12.** Dispositif selon l'une quelconque des revendications précédentes, **caractérisé en ce qu'**on peut déterminer, au moyen du système de mesure inertiel (22), un angle d'inclinaison ($\beta$), un rayon de courbe ($r$) d'une ligne (14) du système (10) et une accélération ($a_x$) du système dans le sens de déplacement (16).

**13.** Dispositif selon l'une quelconque des revendications précédentes, **caractérisé en ce que** l'unité d'enregistrement et d'exploitation (26) comprend une composante de circuit (58) pour la détermination de la force de traction ($F_{zu}$) à partir de l'effort résistant global ($F_w$).

**14.** Dispositif selon l'une quelconque des revendications précédentes, **caractérisé en ce que** le système (10) est un train sur rail comprenant au moins un véhicule moteur.

**15.** Dispositif selon l'une quelconque des revendications 6 à 14, **caractérisé en ce que** le système (10) est un train à suspension magnétique.

**16.** Dispositif selon l'une quelconque des revendications précédentes, **caractérisé en ce que** le système (10) possède une propulsion partagée.

Fig.1

Fig.6

Fig.2

EP 1 111 359 B1

# Fig.3

EP 1 111 359 B1

# Fig.4

# Fig.5

EP 1 111 359 B1

Fig.7

EP 1 111 359 B1